# EUROPEAN PATENT SPECIFICATION

(11) **EP 3 705 232 B1**
(45) Date of publication and mention of the grant of the patent: **15.10.2025**
(21) Application number: 19177223.5
(22) Date of filing: 29.05.2019
(51) Int. Cl.: B25F 3/00, B25B 21/00, B25B 23/00, B25B 23/08, B25F 5/02

(54) **FASTENER INSTALLATION TOOLS, SYSTEMS AND METHODS**
WERKZEUGE, SYSTEME UND VERFAHREN ZUR INSTALLATION VON BEFESTIGUNGSELEMENTEN
OUTILS, SYSTÈMES ET PROCÉDÉS D'INSTALLATION DE FIXATION

(30) Priority: 29.05.2018 US 201815991099
(43) Date of publication of application: 09.09.2020
(73) Proprietor: Simpson Strong-Tie Company, Inc., Pleasanton, CA 94588 (US)
(72) Inventor: TILLINGHAST, Adam, PLEASANTON, CA 94588 (US); HALE, Troy, PLEASANTON, CA 94588 (US)
(74) Representative: Fuchs Patentanwälte Partnerschaft mbB

(56) References cited:
- EP-A1- 0 596 669
- KR-A- 20130 053 589
- US-A- 5 371 992
- US-A1- 2012 204 409

## Description

### BACKGROUND

**Field:** The present disclosure relates to generally tools and methods for fastening structural members during construction. More specifically, the disclosed tools and methods install fasteners to wood framing components including trusses such as rafters, ridge boards, tie beams. chords, joists, top plates, posts, studs, and struts.

**Background:** Building codes are typically based on a set of universal building codes such as the International Residential Code and the International Building Code. The universal building codes set forth requirements for securing wooden framing components during construction. The codes typically require that the top plate and the roof trusses, such as rafters, be connected to comply with pre-established connection force standards calculated to resist substantial uplift forces that may be experienced throughout the lifetime of the structure. For locations which are susceptible to high wind uplift and/or seismic activity, a stronger force-resistant connection between the top plate and trusses may be required by local building codes. A number of techniques, fasteners and hardware items can be employed to provide the required connection between, for example, a top plate and the roof trusses. In document KR 2013 0053589 A, a piece feeding apparatus for motor-driven driver according to the preamble of claim 1 is disclosed.

To secure framing components with sufficient retentive force, each threaded fastener is, for example, driven through a top plate and into the rafter at about a 22.5 degree angle with respect to the vertical. Although securing multiple threaded fasteners is typically more efficient than attaching a hurricane clip or other strap-type connector, it is difficult to consistently implement a 22.5 degree angle within a reasonable range of precision. While protractors, levels and other tools can be used, in practice such tools are clumsy, difficult to use in the field, and time consuming.

There is a need for a tools and methods that facilitate the use of threaded fasteners to connect building framework components at a consistent angle which is easy to use.

The present disclosure addresses the need for tools and methods to efficiently installing multiple threaded fasteners having a consistently precise optimum connection angle.

### SUMMARY

The present invention provides a fastener installation tool and a fastener installation system as set forth in the appended claims.

An aspect of the disclosure is directed to fastener installation systems. The fastener installation systems can be modular and enable a user to achieve installation of a fastening member without getting on a ladder. Suitable fastener installation systems are configurable for fastening a first member to a second member comprising: an elongated adapter having a proximal end and a distal end; a driver which generates torque mounted to a first end of the elongated adapter; a torque transfer unit engaging the elongated adapter and the driver to transfer torque produced by said driver to a fastener; and a fastener installation tool engaging the distal end of the elongated adapter having a body comprising: a first member wherein the first member has a substantially planar profile in a first plane; a positioning member formed integrally with the first member wherein the positioning member has a rocker positioned along a length of the positioning member between a channel face of the first member and a distal end of the positioning member on a first side; an axial channel passing from the distal end of the fastener installation tool to the proximal end; and at least one of a linear marker on an exterior surface of the body in the first plane and an angled marker on the exterior surface of the body in the second plane. The tube assembly can be a telescoping tube assembly. Additionally, the telescopic tube assembly can further comprise a keyway. In some configurations, the telescoping tube assembly comprises a first tubular member configurable to engage the driver and slidably engageable with a second tubular member. At least one of the first members has a notch at a distal end on a channel-facing side. A position indicator tool can also be provided. The position indicator tool can be configured to removably engaging the elongated adapter. Additionally, the position indicator tool can further comprises a pair of mounting members engaging a partially fluid filled vial. In some configurations, the position indicator tool further comprises a laser pointer. The driver can be one of a battery powered drill and a drill with an electrical cord. The rocker presents a curved surface along a plane of the fastener installation tool, In use, the rocker allows the fastener installation tool control an angle of installation by maintaining contact of the rocker on an installation surface while rotating the device relative to the installation surface.

Another aspect of the disclosure is directed to fastener installation tools. Suitable fastener installation tools are configurable to engage the distal end of the elongated adapter having a body comprising: a first member wherein the tangential member has a substantially planar profile in a first plane; a positioning member formed integrally with the first member wherein the positioning member has a rocker positioned along a length of the positioning member between a channel face of the first member and a distal end of the positioning member on a first side; an axial channel passing from the distal end of the fastener installation tool to the proximal end. In at least some configurations, at least one of the first members has a notch at a distal end on a channel-facing side. Additionally, the distal end of the first member is one of curved, flat, angled, and tapered. The positioning member can be configured to include a rocker positioned along a length of the positioning member between a channel face of the first member and a distal end of the positioning member on a first side. Additionally, the positioning member can have a second rocker positioned along a length of the positioning member between the channel face of the first member and the distal end of the positioning member on a second side. In at least some configurations, the rocker has an hourglass shape. At least one of the linear marker on an exterior surface in the first plane and the angled marker on the exterior surface in the second plane can be visually distinct from a remainder of the body of the fastener installation tool. Additionally, the linear markers can be positioned on a first side of the body and a second side of the body. In some configurations, the linear marker has a length greater than 50% of the length of the body of the fastener installation tool. The angled marker can also be positioned on a first side of the body and a second side of the body. In some configurations, the angled marker can be positioned proximal to the rocker.

Yet another aspect of the disclosure is directed to fastener installation tools configurable to engage a distal end of an elongated adapter. Suitable fastener installation tools have a body comprising: a first member wherein the engagement member has a substantially planar profile in a first plane; a positioning member formed integrally with the first member wherein the positioning member has a rocker positioned along a length of the positioning member between a channel face of the first member and a distal end of the positioning member on a first side; an axial channel passing from the distal end of the fastener installation tool to the proximal end. In some configurations, at least one of the first members has a notch at a distal end on a channel facing side. Additionally, the distal end of the first member is one of curved, flat, angled, and tapered. The positioning member can also have a second rocker positioned along a length of the positioning member between the channel face of the first member and the distal end of the positioning member on a second side. In some configurations, the rocker has an hourglass shape. Additionally, the tools can comprise at least one of a linear marker on an exterior surface of the body in the first plane and an angled marker on the exterior surface of the body in the second plane. At least one of the linear marker on an exterior surface in the first plane and the angled marker on the exterior surface in the second plane are visually distinct from a remainder of the body of the fastener installation tool. The linear marker can also be positioned on a first side of the body and a second side of the body. The linear marker can also have a length greater than 50% of the length of the body of the fastener installation tool. In some configurations, the angled marker is positioned on a first side of the body and a second side of the body. The angled marker can also be positioned proximal to the rocker.

Still other aspects of the disclosure are directed to removable position indicator tools. Suitable position indicator tools comprise: a semicircular body having a first end, a second end, a convex exterior surface, and a concave interior surface; a mounting member extending from the convex exterior surface; and wherein at least one of the first end and the second end has a tongue and groove shaped surface. In some configurations, a sealed vial secured by the mounting member and/or a laser pointer secured by the mounting member. Additionally, the position indicator tool can further comprise at least one flange. Additionally, the mounting member further comprises a first mounting member and a second mounting member and further wherein the first mounting member is positioned on the convex exterior surface in a first position and the second mounting member is positioned on the convex exterior surface in a second position offset by about 5 cm (1.97 inch) to the central axis of the removable position indicator tool.

Another aspect of the disclosure is directed to methods of installing fasteners to framing components. Methods include coupling a fastener installation tool of the disclosure to a driver. In some methods, the fastener installation tool can be coupled to an adapter which in turn is coupled to a driver. In still other methods, the fastener installation tool of the disclosure is coupled to a driver and separated from the driver by one or more extension components which are connected via one or more extension connectors. In still other methods, one or more position indicator tools can engage an adapter or an extension component. In use, the fastener installation tool of the disclosure can be used with a drive at a variety of distances away from a user, enabling the user to install fasteners at a plurality of distances without, for example, climbing on a ladder.

### LIST OF REFERENCES

A list of publications, patents, and patent applications is mentioned in this specification, as set out below.
**ARMSTRONG CEILING SYSTEMS,** Installation Manual for Lay-in Modular Ceiling;
**GemRed 82302** Digital Level Angle Finder Protractor Goniometer with Metal Moving Blade & Vial;
**JOHNSON,** 21" Digital Magnetic Level & Angle Locator with Dot Laser, Model 40-6065;
CN-202922337-U published on 5/8/2013 by He Yong;
FR-3029128-A1 published on 6/3/2016 by Gissinger et al.;
US-2010/0213237-A1 published on 8/26/2010 by Tebo;
US-2012/0204409-A1 published on 8/16/2012 by Vandenberg, which discloses a fastener installation tool and related method for installing fasteners in boards installed immediately adjacent one another, without a gap established therebetween. The tool can include an alignment projection that projects a preselected distance downwardly from a lower surface of the tool and can be disposed between opposing corners of first and second boards to install a fastener without establishing a gap between the boards;
US-2014/0161561-A1 published on 6/12/2014 by Tebo;
US-3,864,839-A issued on 2/11/1975 by Wolf;
US-4,132,496-A issued on 1/2/1979 by Casto;
US-4,785,544-A issued on 11/22/1988 by Heinsius et al.;
US-4,922,621-A issued on 5/8/1990 by Maier;
US-4,945,799-A issued on 8/7/1990 by Knetzer;
US-5,361,504-A issued on 11/8/1994 by Huang;
US-5,740,705-A issued on 4/21/1998 by Graham;
US-5,791,207-A issued on 8/11/1998 by Ahdoot;
US-6,109,145-A issued on 8/29/2000 by Habermehl;
US-6,301,997-B1 issued on 10/16/2001 by Welte;
US-6,363,818-B1 issued on 4/2/2002 by Habermehl;
US-6,425,306-B1 issued on 7/30/2002 by Habermehl;
US-6,470,579-B2 issued on 10/29/2002 by Allen;
US-6,493,085-B1 issued on 12/10/2002 by Pfeifer et al.;
US-6,550,152-B2 issued on 4/22/2003 by Myrick;
US-6,647,836-B1 issued on 11/18/2003 by Habermehl;
US-6,862,963-B2 issued on 3/8/2005 by Habermehl et al.;
US-6,990,731-B2 issued on 1/31/2006 by Haytayan;
US-7,194,812-B2 issued on 3/27/2007 by Davis;
US-7,278,223-B1 issued on 10/9/2007 by Dever et al.;
US-7,341,146-B2 issued on 3/11/2008 by Habermehl;
US-7,530,175-B2 issued on 5/12/2009 by Strutt et al.;
US-7,987,608-B2 issued on 8/2/2011 by Rowe;
US 8,256,104 B2 issued September 4, 2012 by Fulbright;
US-8,376,203-B2 issued on 2/19/2013 by Martel et al.;
US-8,403,194-B2 issued on 3/26/2013 by Tebo;
US-8,955,210-B2 issued on 2/17/2015 by Vandenberg;
US-9,144,896-B2 issued on 9/29/2015 by Vandenberg; and
US-9,452,514-B2 issued on 9/27/2016 by Guthrie et al.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
**FIGS. 1A-F** illustrate a fastener installation tool;
**FIGS. 2A-D** illustrate a configuration of a level tool;
**FIGS. 3A-D** illustrate another configuration of a level tool;
**FIG. 4A** illustrates the fastener installation tool with a driver and a telescoping adapter;
**FIG. 4B** is a close-up of a portion of the telescoping adapter;
**FIG. 4C** is a close-up of a proximal end of the telescoping adapter;
**FIG. 4D** is a cross-section of the fastener installation tool of **FIG. 4A****;**
**FIGS. 5A-E** illustrate fastener installation tools in use;
**FIG. 6** illustrates a handle engaging a level tool at a proximal end; and
**FIGS. 7A-E** illustrate a fastener installation too connected to an adapter **(****FIG. 7A****),** the fastener installation tool removed from the adapter **(****FIG. 7B****),** the fastener installation tool engaging an extension without the adapter engaged**(****FIG**. **7C****),** .the fastener installation tool engaging both the extension and the adapter **(****FIG. 7D****);** and a cross-section of the fastener installation tool engaging the extension and the adapter **(****FIG. 7E****).**

### DETAILED DESCRIPTION

### FASTENER INSTALLATION TOOLS

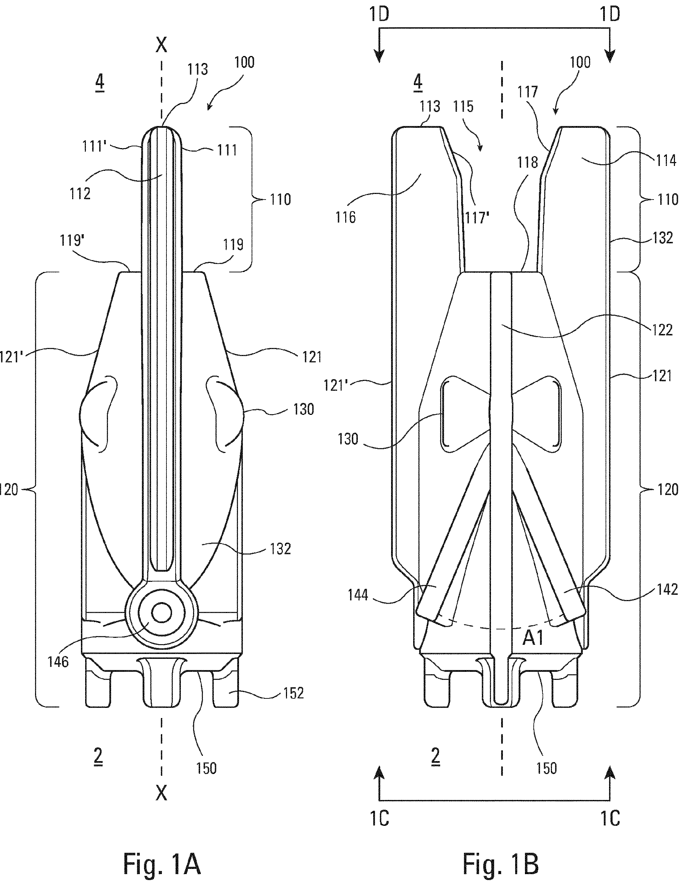

**FIGS. 1A-F** illustrate a fastener installation tool **100.** **FIG. 1A** is a first planar view of the fastener installation tool **100.** The fastener installation tool **100** has a proximal end **2** and a distal end **4.** The distal end **4** has a first thickness in the first planar view of **FIG. 1A** that is different that the thickness of the proximal end **2** in the first planar view. The distal most end of the fastener installation tool **100** forms an engagement member **110** with an upper surface **111** and a lower surface **111'.** Upper surface **111** and the lower surface **111'** can be parallel to each other, or substantially parallel, when viewed in the first planar view. The length of the engagement member **110** is from about 2,29 cm (0.90 inches) to about 3,175 cm (1.25 inches), preferably about 2,477 cm (0.975 inches), and the thickness is from about 0,508 cm (0.200 inches) to about 0.400 inches, preferably about 0,762 cm (0.300 inches).

The distal most end **113** of the engagement member **110** can be configured to have a rounded end (as shown). In another configuration, the distal most end **113** can be, for example, flat (e.g., an end which is perpendicular to the upper surface **111** and lower surface **111'),** pointed, tapered, or angled. A linear marker **112** can be provided which forms a line along at least a portion of the length the fastener installation tool **100.** The linear marker **112** can have a length that is, for example, 50% or greater of the overall length from the proximal end **2** to the distal end **4** of the fastener installation tool **100.** The linear marker **112** can be achieved by using a surface treatment, applying a coating, or by over-molding. Thus, for example, achieving a result where the overall fastener installation tool **100** is one color (e.g., black) and the linear marker **112** is another color (e.g., orange). The linear marker **112** is configured to be visually distinct from the remainder of the fastener installation tool **100.**

The proximal end **2** of the engagement member **110** is formed integrally with a positioning member **120** such that the proximal end **2** is either made from one piece with the positioning member **120** or operates as a single piece when the fastener installation tool **100** is in a final assembly. The positioning member **120** increases in thickness at a neck **119, 119'.** Each side of the positioning member **120** has a substantially flat positioning member **121, 121'.**

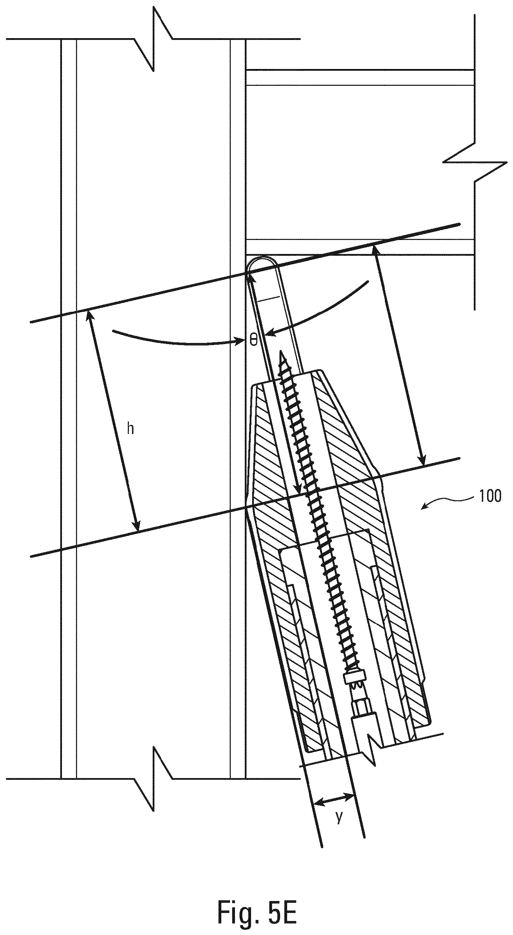

A rocker **130** is positioned approximately halfway along the length of the positioning member **120** between the proximal end **2** to the distal end **4.** An angle e is an angle at which the fastener is installed (see **FIG. 5E****).** The measure of the angle is proportionate to a distance between the rocker **130** contact location and the distal end **113.** As would be appreciated by those skilled in the art, the size and position of the rocker is relative to the size and position of the engagement member **110.**

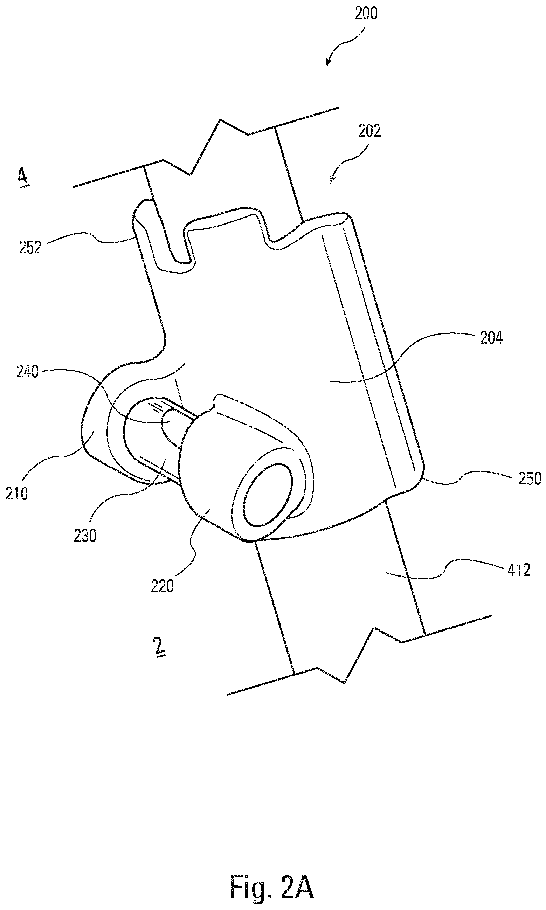

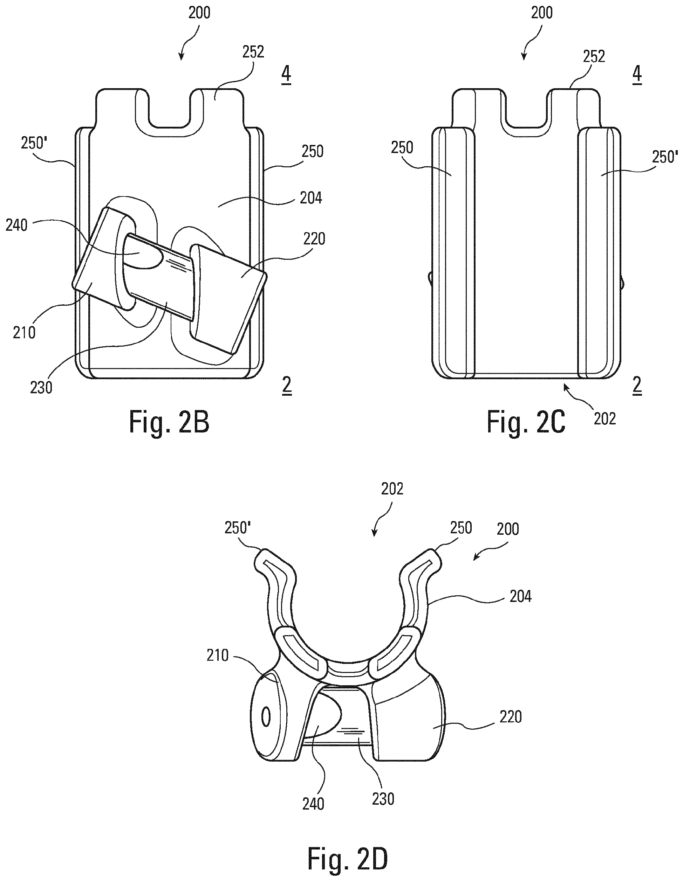

The rocker **130** forms a curved surface that extends from the substantially flat surface of the flat positioning member **121, 121'.** The rocker **130** can be a curved surface, as illustrated, that provides a fulcrum which allows the fastener installation tool **100** to be positioned with respect to the target surface, such as a rafter. This allows the user to pivot the distal end **4** of the fastener installation tool **100** back-and-forth along an axis from the proximal end **2** to the distal end **4.** A tongue and groove shape **150, 152** can be provided at the proximal end **2** of the fastener installation tool **100.** The tongue and groove shape **150, 152** can be used, for example, to align the fastener installation tool with a level tool such as those shown in **FIGS. 2-3****.**

An aperture **146** is provided that passes from one side of the fastener installation tool **100** to the opposing side. The aperture **146** allows an attachment member, such as a screw, to pass through. The aperture **146** can be positioned at a 90 degree angle from the longitudinal axis of the fastener installation tool **100** or at an angle 90 degrees from what is shown. The aperture **146** allows, for example, a screw to pass through to secure the fastener installation tool **100** to the telescoping member.

The length of the positioning member **120** is from about 5,08 cm (2.0 inches) to about 10,16 cm (4.0 inches), preferably about 7,62 cm (3.0 inches). The thickness of the positioning member **120** is from about 1,016 cm (0.40 inches) to about 1,905 cm (0.75 inches), preferably about 1,55 cm (0.610 inches), at its distal end and from about 2,286 cm (0.90 inches) to about 2,858 cm (1.125 inches), preferably about 2,832 cm (1.115 inches), at its proximal end. The rocker **130** extends from the surface of the positioning member from about 1,016 cm (0.40 inches) to about 1,905 cm (0.75 inches), preferably about 1,435 cm (0.565 inches).

Typically, the dimensions are proportional, such that the distance between the points of contact with, for example, the stud, result in a predetermined angle of installation. A suitable range for angle of installation is, for example, between 4 and 14 degrees when a rafter is centered over a stud.

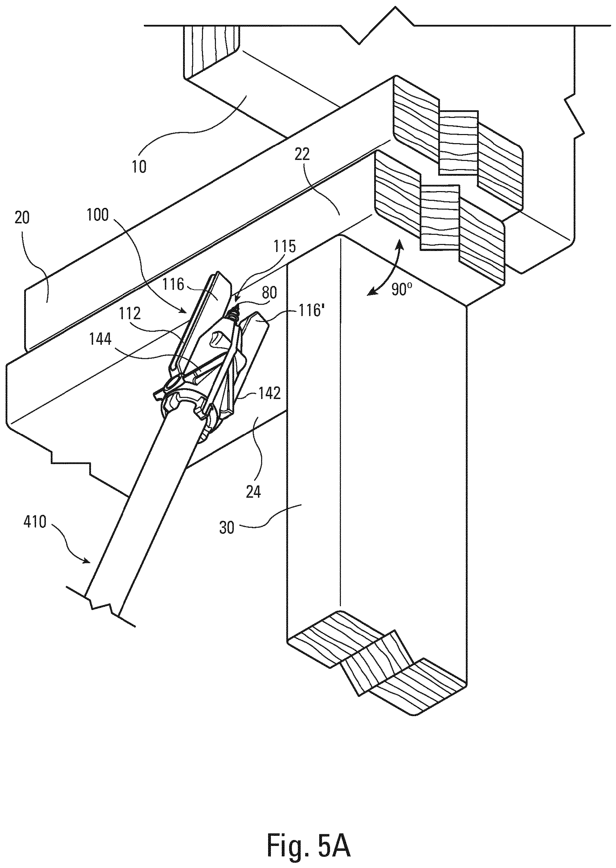

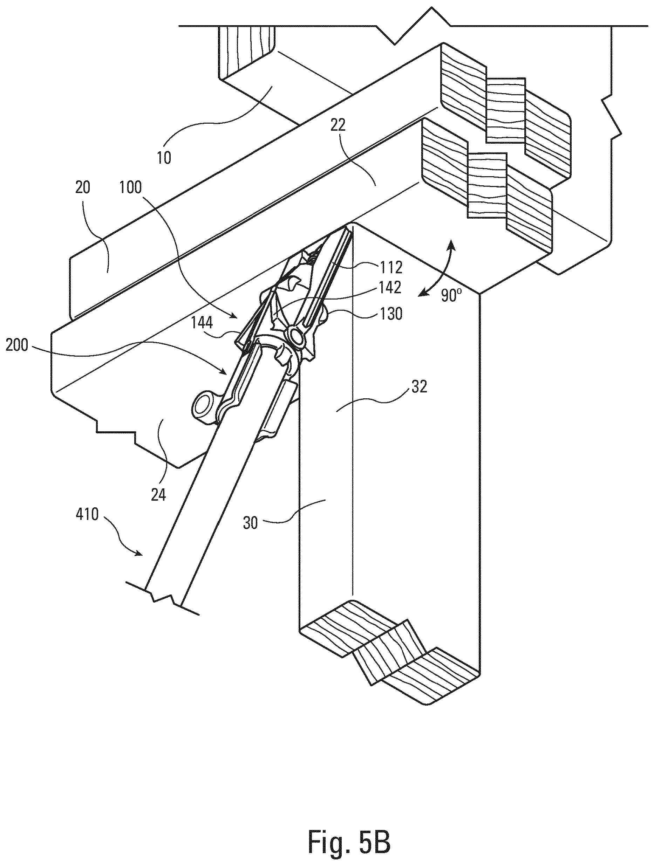

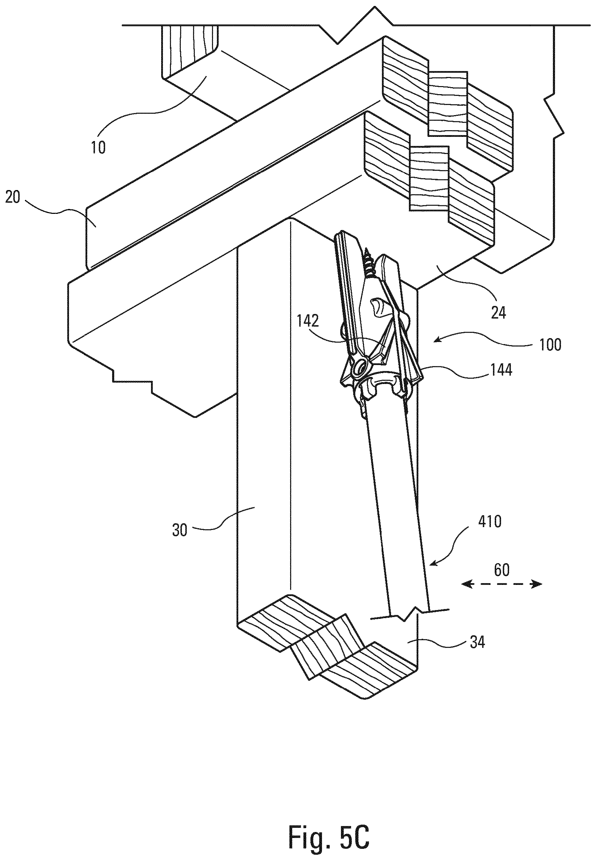

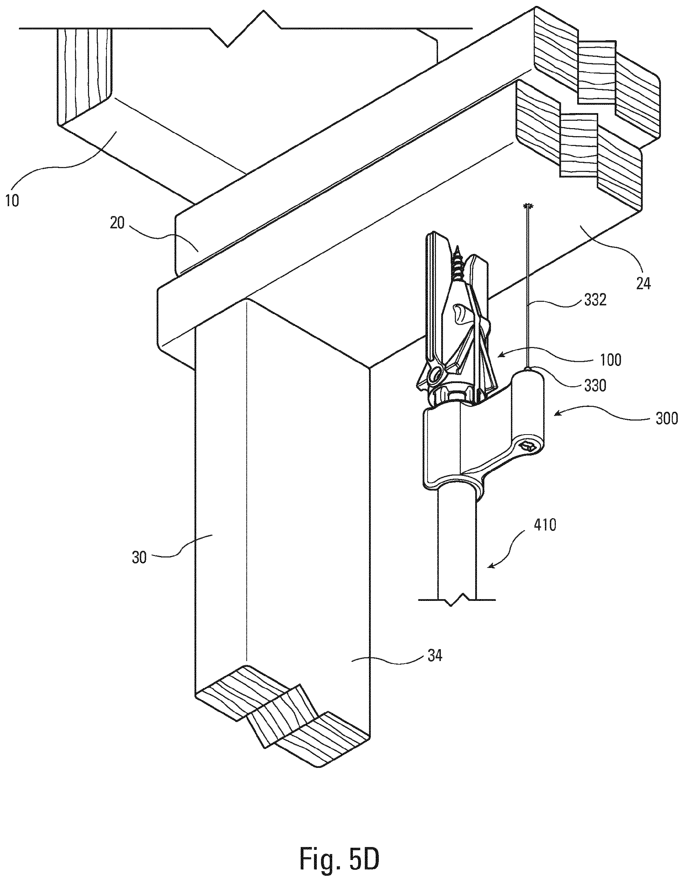

**FIG. 1B** is a planar view of the fastener installation tool **100** rotated perpendicularly 90 degrees about the x axis of the view of **FIG. 1A****,** where the x axis refers generically to an axis which can be in any of the x-y-z direction. The engagement member **110** which appears as a solid member in the first plane shown in **FIG. 1A** has projections **114, 116** with a channel **115** in between the projections **114, 116** in a second plane. The channel **115** between the projections **114, 116** has a channel face **118** at the proximal end. The channel face **118** can be perpendicular to the projections **114, 116.** Additionally, the projections **114, 116** can have parallel, or substantially parallel, sides which face each other within the channel **115** as illustrated. In other configurations the projections **114, 116** are not parallel. The channel **115** has a length of about 1,905 cm (0.75 inches) to about 2,832 cm (1.115 inches), preferably about 2,477 cm (0.975 inches), from the distal end of the fastener installation tool **100** and a width of about 0,762 cm (0.30 inches) to about 1,016 cm (0.40 inches), preferably about 1,27 cm (0.500 inches), between the projections **114, 116.** Other shapes of the channel face **118** can be employed without departing from the scope of the disclosure including but not limited to convex, concave, sloped, and angled. The distal end **4** of the projections **114, 116** can have an interiorly positioned notch **117, 117'** on one or both projections **114, 116** facing into the channel **115.** The positioning member **120** has a pair of angled markers **142, 144.** The pair of angled markers **142, 144** can be achieved by surface treatment, applying a coating, or over-molding. Thus, for example, achieving a result where the overall device is one color (e.g., black) and the angled markers **142, 144** are another color (e.g., orange). The pair of angled markers **142, 144** are configured to be visually distinct from the remainder of the fastener installation tool **100.** The angle **A1** between the angled markers **142, 144** is from about 35 degrees to about 55 degrees, preferably about 45 degrees. The angled markers **142, 144** are angled to a degree off of a linear axis between the proximal end **2** and the distal end 4 to allow the user to visually determine when one of the angled markers **142, 144** is parallel to a vertical member or parallel a horizontal member (shown in **FIG. 5****).**

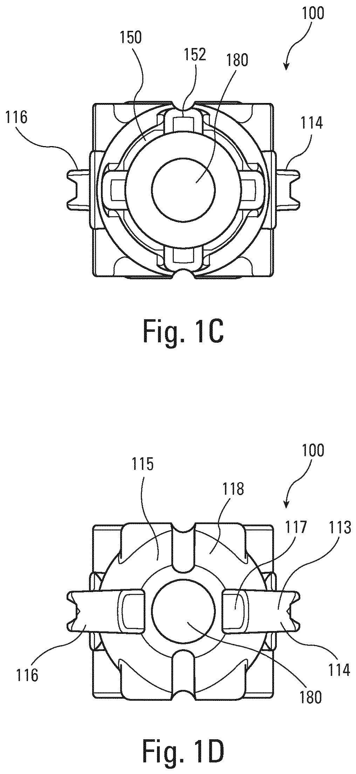

**FIG. 1C** is a view of the fastener installation tool **100** of **FIGS. 1A-B** from the proximal end **2.** An axial channel **180** which passes through the fastener installation tool **100** from the proximal end **2** to the distal end **4** is provided through which a fastener (shown in **FIG. 5****)** passes during use of the fastener installation tool **100.**

**FIG. 1D** is a view of the fastener installation tool **100** of **FIGS. 1A-B** from the distal end **4** down the axial channel **180.**

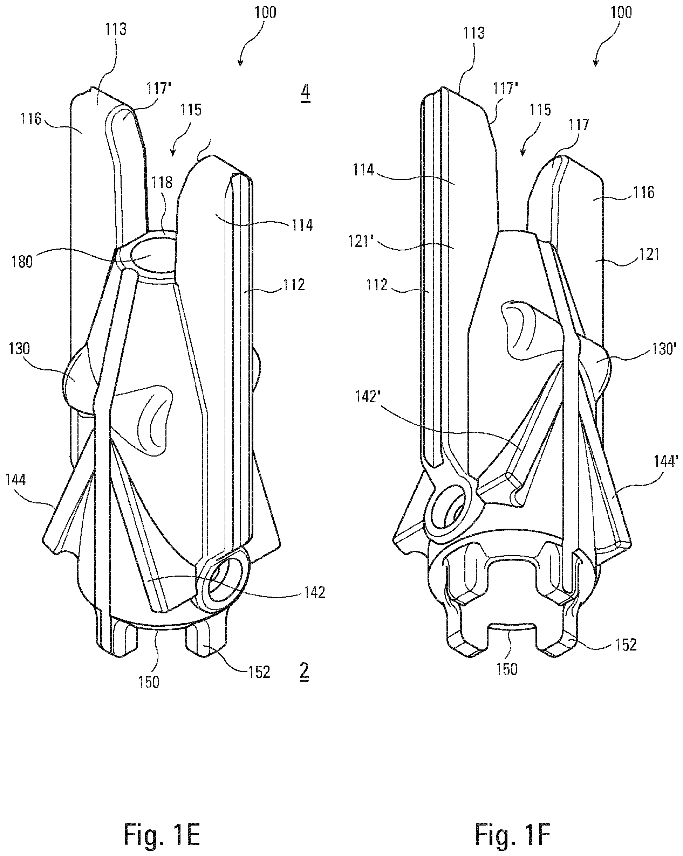

**FIGS. 1E-F** are perspective views of the fastener installation tool **100** of **FIGS. 1A-B****.**

### POSITION INDICATOR TOOLS

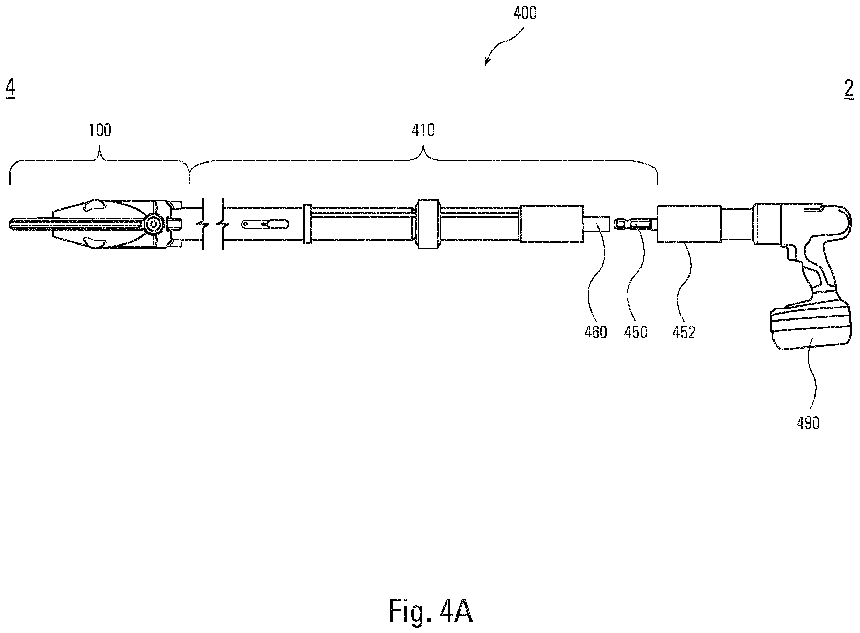

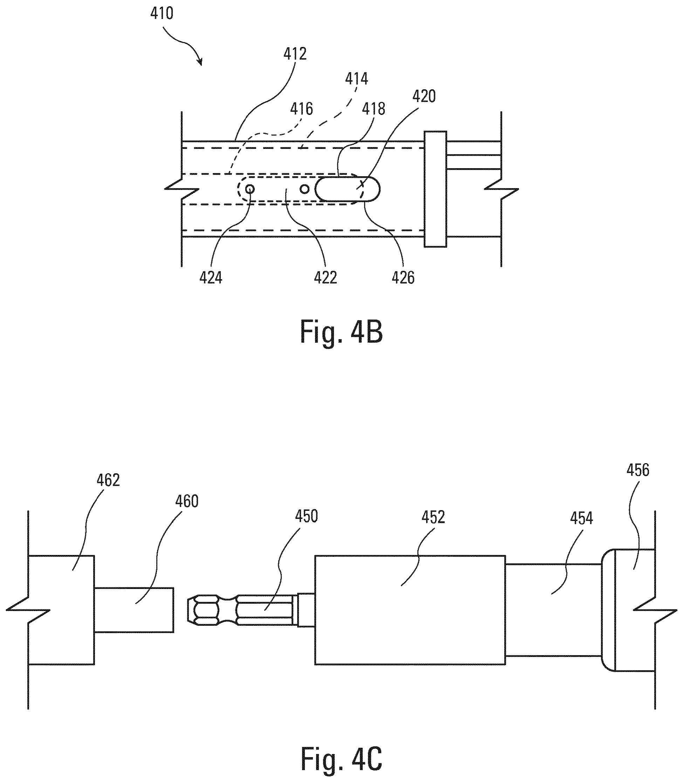

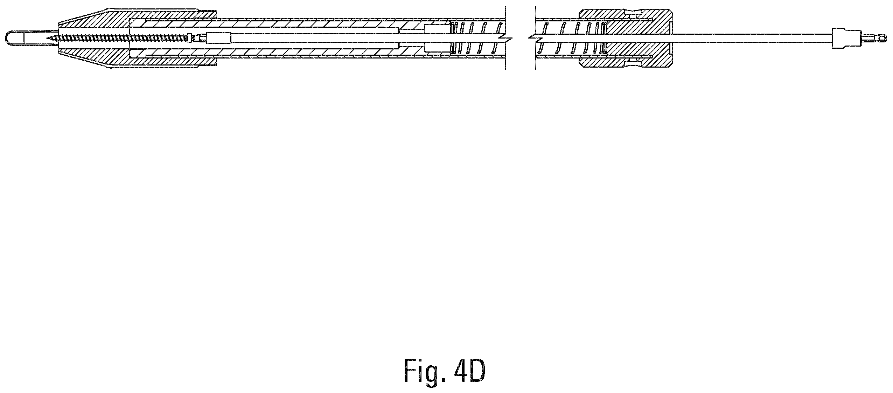

**FIGS. 2A-D** illustrate a configuration of position indicator tool such as a level tool **200.** The level tool **200** is configured to removably engage a tubular member **412** (shown in more detail in **FIG. 4****).** The level tool **200** has a length of from about 1.60 inches to about 2.10 inches, preferably about 1.886 inches, and a diameter of from about 2,286 cm (0.90 inches) to about 3,302 cm (1.30 inches), preferably about 2,832 cm (1.115 inches).

The level tool **200** has a partial tubular shape having a curved interior surface which has an open end **202** along a length to allow the level tool **200** to engage a tubular member **412** as shown in **FIG. 2****.** The curved interior surface (shown in **FIG. 2D****)** has a length that is substantially the same as the overall length of the level tool **200,** and a diameter across a mid-line of 1,524 cm (0.6 inches) to about 3,048 cm (1.2 inches), preferably about 2,223 cm (0.875 inches). The partial tubular shape can be from about 225 degrees of a 360 degree circle to about 275 degrees of a 360 degree circle, preferably about 250 degrees. Other shapes can be used without departing from the scope of the disclosure.

A flange **250, 250'** can be provided on either side of the open end **202** of the level tool **200** (i.e., the end that engages the tubular member **412).** Either or both flanges **250, 250'** which present a tongue and groove interface can extend along the entire length of the open end **202** of the level tool **200.** Flanges can be provided for ease of attachment to the tubular member. A bubble level is positioned on an exterior surface **204** of the level tool **200.** The bubble level has a vial **230** which is slightly curved and held by mounting members **210, 220** on either side of the vial **230.**

The mounting members **210, 220** extend from an exterior surface of the level tool **200.** As illustrated, the mounting members **210, 220** are not parallel one another on the exterior surface **204.** However, the mounting members **210, 220** can be parallel in some configurations. The mounting members **210, 220** are configurable to have a common axis through their center. One mounting member **210** is closer to the proximal end **2** while the other mounting member **220** is farther away from the proximal end **2** and closer to the distal end **4.** The spacing between the mounting members **210, 220** is such that a user has an unobstructed view of the bubble **240** in the vial during operation when the fastener installation tool **100** is at an optimum position for installing the fastener and an obscured view when the fastener installation tool **100** is not at an optimum position for installing the fastener.

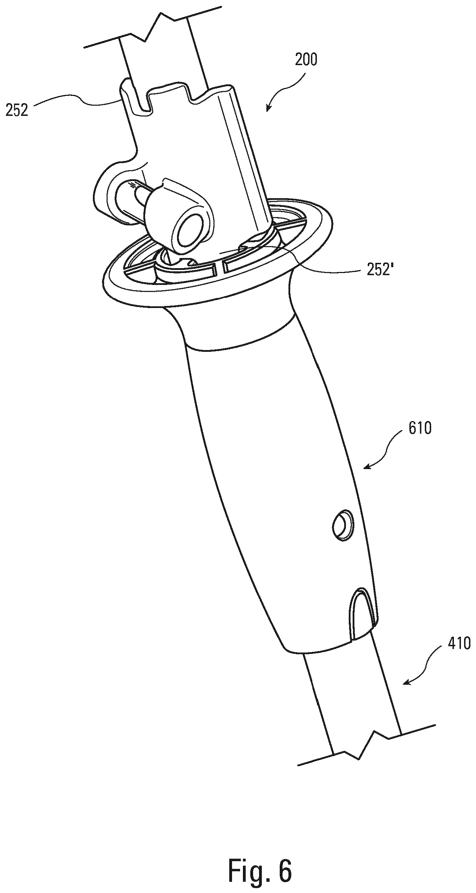

The vial **230** can be a curved glass or plastic vial. The vial **230** is incompletely filled with a liquid. Suitable liquid for the vial can be a colored liquid, such as a colored alcohol. The vial has a slight upward curve so that a bubble **240** in the fluid naturally rests at a center position along the length of the vial **230** when an axis of the vial **230** between an end engaging a first mounting member **210** and an end engaging a second mounting member **220** is either horizontal or vertical to, for example, a top plate **20** or a vertical stud **30** (shown in **FIG. 5****).** At slight inclinations, the bubble **240** travels away from center position of the vial **230** toward a first end or second end of the vial **230.** Movement of the bubble **240** within the vial **230** helps the user determine when a horizontal (level) or vertical (plumb) position has been achieved. An end of the level tool **200,** such as the distal end **4,** can have a tongue and groove **252** shape. The tongue and groove shape **252** can be used to align the level tool **200** with, for example, a fastener installation tool **100** of **FIG. 1****.** In other configurations, the end of the level tool **200** can be flat. **FIG. 6** illustrates a level tool **200** which has a tongue and groove shape **252** on both ends of the tool. The proximal end of the tongue and groove **252** can be configured to engage a handle **610** as illustrated in **FIG. 6****.**

**FIG. 2B** is a view of the level tool **200** of **FIG. 2A** from a first side showing a convex curved exterior surface and the offset positioning of the mounting members **210,220.** **FIG. 2C** is a view of the level tool **200** of **FIG. 2A** from a second side showing a concave curved interior surface. **FIG. 2D** illustrates the level tool **200** rotated 90 degrees from the view in **FIG. 2B****.** From this view, the open end **202** with its semi-circular shape and flanges **250** that extend away from a centerline is apparent.

The mounting members **210, 220** can form an inverted "V" or "U" when viewed from the side as shown in **FIG. 2D****.** This orientation of the mounting members **210, 220** allows as much light as possible to pass through the vial, which provides for better visibility of the bubble for the user. In some configurations, a symmetrical part can be used from the right and the left which allows the flanges forming a tongue and groove surface to be positioned on both sides of the level tool **200.**

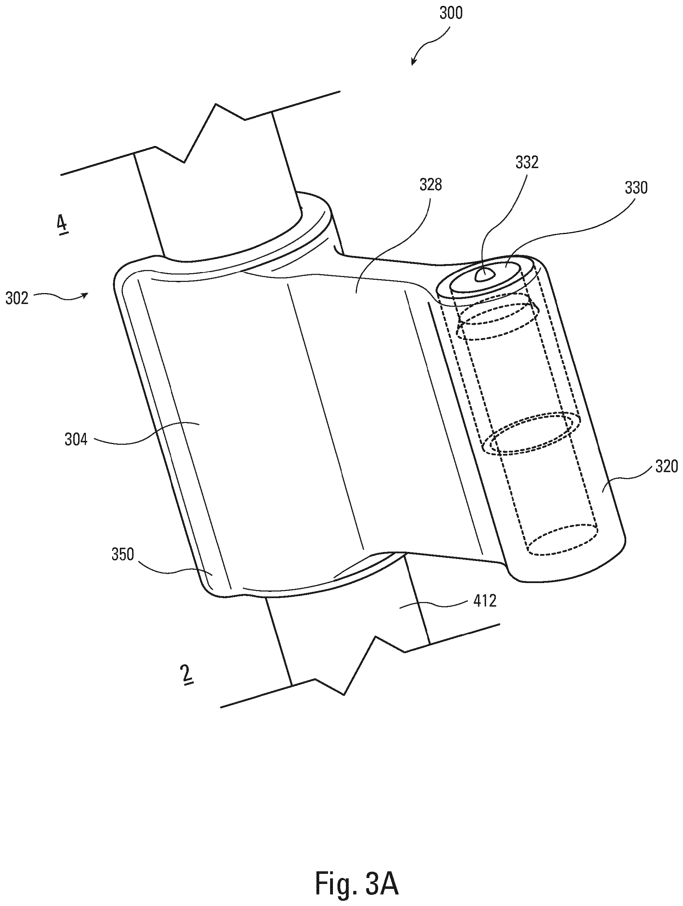

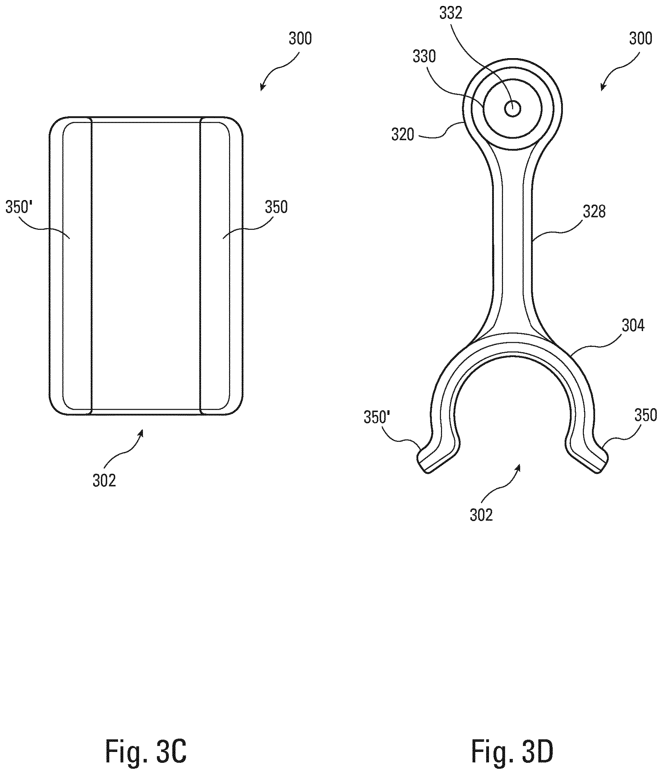

**FIGS. 3A-D** illustrate a configuration of a position indicator tool **300.** The position indicator tool **300** is configured to removably engage a tubular member **412** as shown in **FIG. 4****.** The position indicator tool **300** has a length of from about 4,064 cm (1.60 inches) to about 5,588 cm (2.20 inches), preferably about 4,790 cm (1.886 inches), and a diameter of from about 2,032 cm (0.80 inches) to about 3,048 cm (1.20 inches), preferably about 2,54 cm (1.0 inches). The position indicator tool**300** has a partial tubular shape having a curved interior surface which has an open end **302** along a length to allow the position indicator tool **300** to engage a tubular member **412** as shown in **FIG. 4****.** The curved interior surface (shown in **FIG. 3D****)** has a length of about 4,064 cm (1.60 inches) to about 5,588 cm (2.20 inches), preferably about 4,790 cm (1.886 inches), and a diameter across a mid-line of about 1,27 cm (0.50 inches) to about 2,54 cm (1.0 inches), preferably about 1,905 cm (0.75 inches).

The partial tubular shape can be from about 225 degrees of a 360 degree circle to about 275 degrees of a 360 degree circle, preferably about 250 degrees. Other shapes can be used without departing from the scope of the disclosure.

A flange **350, 350'** can be provided on either side of the open end **302** of the level tool **300.** Either or both flanges **350, 350'** can extend along the entire length of the open end **302** of the position indicator tool **300.** A laser element **330** is positionable within mounting **320.** The mounting **320** is positioned on a connecting member **328** which is integrally formed on the exterior surface **304** of the position indicator tool **300.** The height of the laser element is such that the laser light still appears on the truss or rafter when the screw is being installed as described below in **FIG. 5C****.** The ability to continue to visualize the laser light enables the user to ensure accurate placement of the fastener.

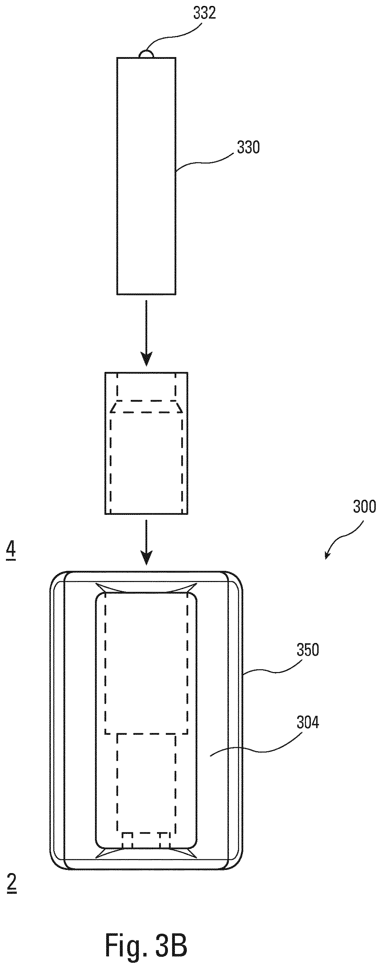

**FIG. 3B** is a view of the position indicator tool **300** of **FIG. 3A** from a first side showing a convex curved exterior surface. As shown in **FIG. 3B** the laser element **330** extends beyond the upper surface of the mounting **320.** To activate the laser element **330,** the laser element **330** is pushed out of the mounting **320.** As will be appreciated by those skilled in the art, activation of the laser can be achieved a variety of ways. In one embodiment, the whole laser element is pushed from, for example, the bottom so that it extends out of the housing. The step of pushing the laser element turns on the light. The step of pushing the laser back into the housing turns off the laser light. In another configuration, a switch element can be provided which is activated when the fastener installation tool engages a work surface. Removal of the fastener installation tool from the work surface would then turn off the laser light. In another configuration, a switch can be provided on the handle of the tool. In still another configuration, the light can be activated by twisting the mounting piece and the tool relative to one another. In still another configuration, a Bluetooth switch can be provided. In yet another configuration, a switch can be provided which is related to the spinning mandrel inside the tool. Spinning of the mandrel would activate the switch and turn on the laser.

**FIG. 3C** is a view of the position indicator tool **300 of** **FIG. 3A** from a second side showing a concave curved interior surface. **FIG. 3D** illustrates the position indicator tool **300** rotated 90 degrees from the view in **FIG. 3B****.** From this view, the open end **302** with its semi-circular shape and flanges **350** that extend away from a centerline is apparent. The position indicator tool **300** could also have tongue and groove features as shown on the bubble level mount.

### TELESCOPING ADAPTERS

**FIG. 4A** illustrates the fastener installation tool **100** with a driver **490** and a telescoping adapter **410.** The fastener installation tool **100** engages the telescoping adapter **410** at a distal end **4.** The proximal end **2** of the telescoping adapter **410** engages the driver **490.** The driver **490** is any suitable tool, such as a heavy-duty hand tool. Suitable heavy duty tools include, for example, power drills.

**FIG. 4B** is a close-up of a portion of the telescoping adapter **410.** The telescoping adapter has a first tubular member **412** and a second tubular member **414** that fits within the interior of the first tubular member **412.** The first tubular member **412** can have a larger diameter than the second tubular member **414.** The two tubular members can be keyed to control movement of the first tubular member **412** with respect to the second tubular member **414.** The keyed feature can act as a forward and backward stop position. An elongated channel **416** or slot is formed in the second tubular member **414.** A keying member **420** is provided which has an elongated body **422** to fit within the elongated channel **416** and a raised element **420** which is sized to fit within an aperture **418** in the first tubular member **412.** The elongated body **422** of the keying member **420** is passed through the aperture **418** in the first tubular member **412.** The elongated body **422** is configured to sit within the elongated channel **416.** Once the elongated body **422** is positioned within the elongated channel **416,** the raised element **420** sits within the aperture **418.** The top surface **426** of the raised element **420** can be flush with the exterior surface of the first tubular member **412** or extend above the exterior surface of the first tubular member **412.** One or more securement devices (not shown), such as screws, can be used to secure the keying member **420** securely in position. The securement devices would pass through the apertures **422, 424** in the first tubular member **412** and the keying member **420.**

**FIG. 4C** is a close-up of a proximal end **2** of the telescoping adapter **410.** A drill chuck **460** engages the mandrel **450** which spins freely within the telescoping tube **454.**

**FIG. 4D** shows a cross-section of the telescoping adapter **410** with the mandrel **450** at the proximal end and the bit **452** towards the distal end, where the bit **452** engages the fastener **80.**

### USE OF DEVICES AND SYSTEMS

**FIGS. 5A-E** illustrate fastener installation tools in use when installing fasteners to, for example, wood framing components. The projections **116** act as forks to stabilize the tool during use while the fastener is being driven into, for example, the rafters.

As shown for illustration in **FIGS. 5A-D****,** a rafter **10** is adjacent a top plate **20.** A vertical stud **30** engages the top plate **20** at a 90 degree angle. Movement of the fastener installation tool **100** changes the orientation of the angled markers **142, 144** so that one of the markers is parallel to either the top plate **20** or the vertical stud **30.** As shown in **FIG. 5A****,** the angled marker **142** is positioned approximately parallel to the vertical stud **30.** Because the angled marker **142** is visually distinct from the body of the fastener installation tool **100,** the user can readily assess the position of the marker **142,** for example, to the vertical stud **30.** The front face of the top plate **20** and the stud **30** are essentially flush. The angled markers **142** provide a visual references, for example, to the target surface. Positioning either of the angled markers **142** so that they are vertical, for example, ensures a correct angle of installation of the screw **80.** Further, the angled markers **142** can be visually compared to other vertical surfaces or edges within the line of sight by the user. Another feature of the design is that the interiorly positioned notches **117, 117'** are angled to allow easy and comfortable engagement with the top plate **20** as shown in **FIG. 5A****.** This provides tactile feedback to the user that the tool is positioned securely.

In **FIG. 5A****,** the fastener installation tool **100** attached to a telescoping adapter **410** engages a side surface **22** of a top plate **20** at an angle. The fastener installation tool **100** is positioned so that one of the interiorly positioned notches **117** of a projection **116** is positioned on the side surface **22** of the top plate **20** while the second projection **116'** is positioned on the lower surface **24** of the top plate **20.** The distal tip of the fastener **80** extends beyond the recessed face of the channel **115.** The user can move the telescoping adapter **410** upward to change the angle of attack of the fastener installation tool **100** and the fastener **80.** Additionally, the user can move the telescoping adapter **410** from side-to side to change the angle of attack of the fastener installation tool **100** and the fastener **80.**

Turning to **FIG. 5B****,** the fastener installation tool **100** is shown attached to a telescoping adapter **410** turned 90 degrees from the deployment illustrated in **FIG. 5A** and at the intersection between the top plate **20** and the vertical stud **30.** Additionally, a level tool **200** is positioned on the telescoping adapter **410** immediately below the fastener installation tool **100.** In use, the user can move the telescoping adapted forward and backward so that a rocker **130** engages a surface **32** of the vertical stud **30.** The level tool **200** is positioned so that the user can look up at the level tool **200** to determine whether the tool itself is at a desired orientation.

**FIG. 5C** illustrates the fastener installation tool **100** engaging a telescoping adapter **410.** The fastener installation tool engages the top plate **20** on the lower surface **24** and the vertical stud **30** on a second surface **34.** The rocker **130** and the visual indicator **112** allow the user to essentially aim for the center of the rafter. When the rafter is not centered over the stud, the user can utilize the rocker **130** engagement to quickly and easily adjust the angle of installation as needed. In some configurations, the telescoping adapter **410** and fastener installation tool **100** are moved towards and away **60** the vertical stud **30.**

**FIG. 5D** illustrates the fastener installation tool **100** attached to a telescoping adapter **410.** Additionally, a position indicator tool **300** is positioned on the telescoping adapter **410** immediately below the fastener installation tool **100.** The fastener installation tool **100** is shown positioned away from the intersection between the top plate **20** and the vertical stud **30.** In use, the laser element **330** is activated so that a light beam **332** is generated. The light beam **332** from the laser element **330** provides the user with visual feedback of the relative location of where the fastener will penetrate the top plate **20.** For purposes of illustration, the position indicator tool **300** is shown below the lower surface of the top plate **20.** However, in use the position indicator tool **300** would allow for installation from the side of a stud **30** and below a rafter **10.** So the vertical installation illustrated is for ease of reference, as would be appreciated by those skilled in the art. In use, the position indicator tool **300** would allow for installation at angles other than perpendicular.

Prior to engagement of the fastener installation tool **100** with, for example, the top plate **20** of the roof support structure, a fastener **80** is placed into a fastener channel with the fastener head proximate to or engaging with a coupler. A portion of the fastener **80** is typically initially received in a chamber of the telescoping adapter **410** adjacent the distal end **4.** A mandrel **450** is proximate the proximal opening of the telescoping adapter **410.** It will be appreciated that the fastener installation tool **100** as properly positioned on the distal end **4** of the telescoping adapter **410** provides an entry point and for the fastener **80** as the fastener **80** is driven through the top plate **20** into the roof support member with the application of torque from the driver **490.** The driver **490** can be easily dismounted from the telescoping adapter **410.** The telescoping adapter **410** may employ a receiver configured to receive and functionally attach to a wide range of dismountable drill guns without the torque driver **490** being fully integrated with the telescoping adapter **410,** as will be appreciated by those skilled in the art.

**FIG. 5E** is a close-up cut-away of the fastener installation tool **100** with the distal end engaging the top plate **20,** and a side surface of the fastener installation tool **100** engaging the side of the vertical stud **30.** The fastener is positioned in the central channel. **h** is a dimension that is parallel to **the** center axis of the tool and the fastener. y is the short side of the triangle formed between the vertical stud **30** and **h,** and Θ is the angle between the vertical member **30** and **h.**

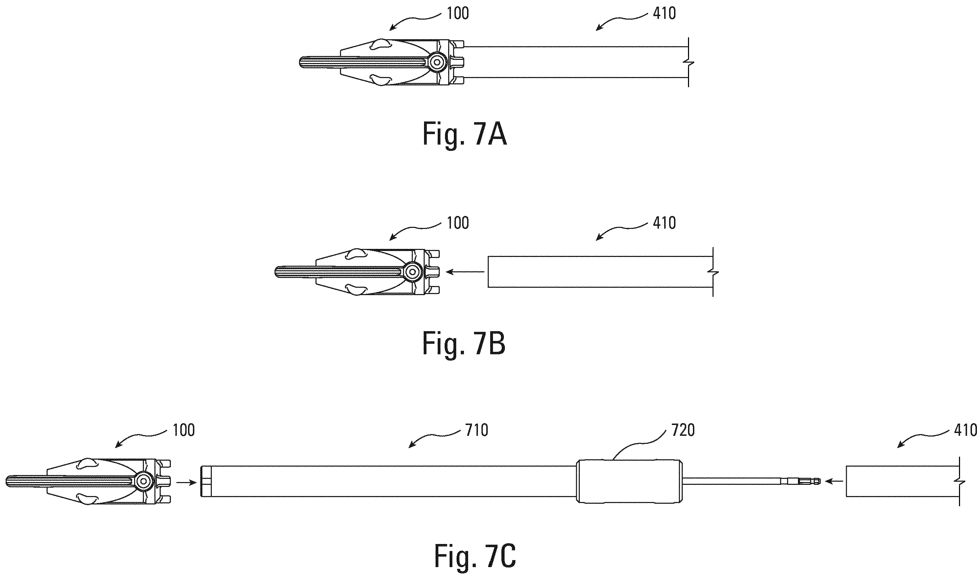

Turning now to **FIGS. 7A-E** a fastener installation tool **100** is illustrated connected to telescoping adapter **419** in **FIG. 7A****.** As described above, the fastener installation tool **100** can be removed from the telescoping adapter **410** as shown in **FIG. 7B****.** In some use situations, additional distance between the fastener installation tool **100** and the driver **490** (shown in **FIG. 4A****)** may be desirable. Where additional distance is desirable, the fastener installation tool **100** engages a secondary extension **710** via an extension connector **720.**

The fastener installation tool **100** can be part of a modular system which is connected to one or more secondary extensions **710** via one or more extension connectors **720.** The modular configuration allows the tool to be used at a variety of distances away from the user. This allows the user to secure framing components at a target angle while remaining on the ground, thus eliminating the need to climb on a ladder to secure framing components or achieve a target angle of the fastener.

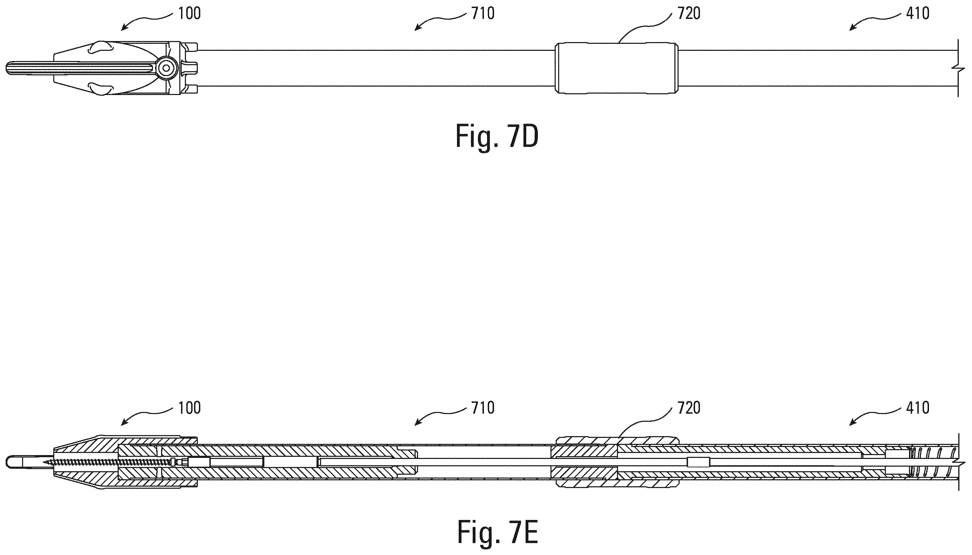

**FIG. 7C** illustrates the fastener installation tool **100,** the secondary extension **710,** the extension connector **720** and the telescoping adapter **410..** When the components are connected, the fastener installation tool **100** engages the secondary extension **710** at the proximal end of the fastener installation tool **100** and the distal end of the secondary extension **710.** The secondary extension **710** engages the extension connector **720** at the proximal end of the secondary extension **710** and the distal end of the extension connector **720.** The extension connector **720** engages the telescoping adapter **410** at the proximal end of the extension connector **720** and the distal end of the telescoping adapter **410.** **FIG. 7D** illustrates a side-view of the connection between the secondary extension **710,** extension connector **720** and the telescoping adapter **410.** A cross-section of the fastener engaging the extension and the adapter is illustrated in **FIG. 7E****.** As illustrated, the secondary extension **710** and the telescoping adapter **410** fit within an interior of the extension connector **720.**

While preferred embodiments of the present invention have been shown and described herein, it will be obvious to those skilled in the art that such embodiments are provided by way of example only. Numerous variations, changes, and substitutions will now occur to those skilled in the art without departing from the invention as set forth in the appended claims. It should be understood that various alternatives to the embodiments of the invention described herein may be employed in practicing the invention as set forth in the appended claims. The following claims define the scope of the invention.

## Claims

1. A fastener installation tool (100) configured for engaging the distal end of an elongated adapter having a body comprising:
a first member (110) having a substantially planar profile in a first plane;
a positioning member (120) formed integrally with the first member
an axial channel (115) passing from the distal end of the fastener
installation tool to the proximal end, **characterised in that** the positioning member has a rocker (130) positioned along a length of the positioning member between a channel face (118) of the first member and a distal end of the positioning member on a first side.

2. A fastener installation system for fastening a first member to a second member comprising the fastener installation tool (100) of claim 1 and further comprising:
an elongated adapter (410) having a proximal end and a distal end;
a driver (490) which generates torque mounted to a first end of the elongated adapter;
a torque transfer unit engaging the elongated adapter and the driver to transfer torque produced by said driver to a fastener; and
at least one of a linear marker (112) on an exterior surface of the body in the first plane and an angled marker (142) on the exterior surface of the body in the second plane.

3. The fastener installation system of claim 2 wherein the elongated adapter is a telescoping tube assembly.

4. The fastener installation system of claim 3 wherein said telescopic tube assembly further comprises a keyway.

5. The fastener installation system of claim 3 or claim 4 wherein the telescoping tube assembly comprises a first tubular member configurable to engage the driver and slidably engageable with a second tubular member.

6. The fastener installation system of any one of claims 2 to 5 wherein at least one of the first members has a notch (117) at a distal end on a channel-facing side.

7. The fastener installation system of any one of claims 2 to 6 further comprising a position indicator tool (300) removably engaging the elongated adapter.

8. The fastener installation system of claim 7 wherein the position indicator tool further comprises a pair of mounting members engaging a partially fluid filled vial.

9. The fastener installation system of claim 7 or claim 8 wherein the position indicator tool further comprises a laser pointer.

10. The fastener installation system of any one of claims 2 to 9 wherein the driver is one of a battery powered drill and a drill with an electrical cord.

11. The fastener installation system of any one of claims 2 to 10 further comprising one or more secondary extensions and one or more extension connectors, wherein the one or more secondary extensions and one or more extension connectors modularly engage the elongated adapter.

12. The fastener installation tool of claim 1 further comprising one or more linear markers and one or more angled markers wherein at least one of the one or more linear markers (112) is positioned on an exterior surface in the first plane and one or more angled marker (142) are positioned on the exterior surface in the second plane and further wherein the one or more linear markers and one or more angled markers are visually distinct from a remainder of the body of the fastener installation tool.

13. The fastener installation tool of claim 1, wherein:
the first member comprises a pair of engagement members having a substantially planar profile in a first plane.

14. The fastener installation tool of claim 1 or claim 13 wherein the first member has a notch (117) at a distal end on a channel-facing side.

15. The fastener installation tool of any one of claims 1, 13 or 14 wherein the distal end of the first member is one of curved, flat, angled, and tapered.

16. The fastener installation tool of any one of claims 1 or 13 to 15 wherein the positioning member has a second rocker positioned along a length of the positioning member between the channel face of the first member and the distal end of the positioning member on a second side.

17. The fastener installation tool of any one of claims 1 or 13 to 16 wherein the rocker and/or the second rocker has an hourglass shape.

18. The fastener installation tool of any one of claims 13 to 17 further comprising at least one of a linear marker (112) on an exterior surface of the body in the first plane and an angled marker (142) on the exterior surface of the body in the second plane.

19. The fastener installation tool of claim 18 wherein at least one of the linear marker on an exterior surface in the first plane and the angled marker on the exterior surface in the second plane are visually distinct from a remainder of the body of the fastener installation tool.

20. The fastener installation tool of any one of claims 1, 12, 18 or 19 wherein a linear marker is positioned on a first side of the body and a second side of the body.

21. The fastener installation tool of any one of claims 1, 12 or 18 to 201 wherein a linear marker has a length greater than 50% of the length of the body of the fastener installation tool.

22. The fastener installation tool of any one of claims 1, 12, or 18 to 21 wherein an or the angled marker is positioned on a first side of the body and a second side of the body.

23. The fastener installation tool of any one of claims 1, 12 or 18 to 22 wherein an or the angled marker is positioned proximal to the rocker.

## Patentansprüche

1. Werkzeug (100) zur Installation von Befestigungsmitteln, das dazu eingerichtet ist, das distale Ende eines länglichen Zwischenstücks in Eingriff zu nehmen, und das einen Körper aufweist und Folgendes umfasst:
ein erstes Element (110), das in einer ersten Ebene ein im Wesentlichen ebenes Profil aufweist;
ein Positionierungselement (120) das einstückig mit dem ersten Element ausgebildet ist;
einen axialen Durchgang (115), der von dem distalen Ende des Werkzeugs zur Installation von Befestigungsmitteln zu dem proximalen Ende verläuft, **dadurch gekennzeichnet, dass**
das Positionierungselement einen Kipphebel (130) aufweist, der entlang einer Länge des Positionierungselements zwischen einer Durchgangsseite (118) des ersten Elements und einem distalen Ende des Positionierungselements auf einer ersten Seite positioniert ist.

2. System zur Installation von Befestigungsmitteln zum Befestigen eines ersten Elements an einem zweiten Element, umfassend das Werkzeug (100) zur Installation von Befestigungsmitteln nach Anspruch 1 und ferner umfassend:
ein längliches Zwischenstück (410) mit einem proximalen Ende und einem distalen Ende;
einen Treiber (490), der ein Drehmoment erzeugt und an einem ersten Ende des länglichen Zwischenstücks angebracht ist;
eine Drehmomentübertragungseinheit, die das längliche Zwischenstück und den Treiber in Eingriff nimmt, um das von dem Treiber erzeugte Drehmoment an ein Befestigungsmittel zu übertragen; und
mindestens eine lineare Markierung (112) auf einer Außenfläche des Körpers in der ersten Ebene und eine winkelförmige Markierung (142) auf der Außenfläche des Körpers in der zweiten Ebene.

3. System zur Installation von Befestigungsmitteln nach Anspruch 2, wobei das längliche Zwischenstück eine zusammenschiebbare Röhrenanordnung ist.

4. System zur Installation von Befestigungsmitteln nach Anspruch 3, wobei die zusammenschiebbare Röhrenanordnung ferner eine Keillängsnut umfasst.

5. System zur Installation von Befestigungsmitteln nach Anspruch 3 oder Anspruch 4, wobei die zusammenschiebbare Röhrenanordnung ein erstes röhrenförmiges Element umfasst, das dazu eingerichtet sein kann, den Treiber in Eingriff zu nehmen, und das mit einem zweiten röhrenförmigen Element verschiebbar in Eingriff gebracht werden kann.

6. System zur Installation von Befestigungsmitteln nach einem der Ansprüche 2 bis 5, wobei zumindest eines der ersten Elemente eine Kerbe (117) an einem distalen Ende auf einer zum Durchgang weisenden Seite aufweist.

7. System zur Installation von Befestigungsmitteln nach einem der Ansprüche 2 bis 6, das ferner ein Positionsanzeigewerkzeug (300) umfasst, das das längliche Zwischenstück abnehmbar in Eingriff nimmt.

8. System zur Installation von Befestigungsmitteln nach Anspruch 7, wobei das Positionsanzeigewerkzeug ferner ein Paar Montageelemente umfasst, die ein teilweise mit Fluid gefülltes Fläschchen in Eingriff nehmen.

9. System zur Installation von Befestigungsmitteln nach Anspruch 7 oder Anspruch 8, wobei das Positionsanzeigewerkzeug ferner einen Laserpointer umfasst.

10. System zur Installation von Befestigungsmitteln nach einem der Ansprüche 2 bis 9, wobei der Treiber ein batteriebetriebener Bohrer oder ein mit einem elektrischen Kabel betriebener Bohrer ist.

11. System zur Installation von Befestigungsmitteln nach einem der Ansprüche 2 bis 10, ferner umfassend einen oder mehrere sekundäre Fortsätze und ein oder mehrere Fortsatzverbindungsstücke, wobei der eine oder die mehreren sekundären Fortsätze und das eine oder die mehreren Fortsatzverbindungsstücke das längliche Zwischenstück modular in Eingriff nehmen.

12. Werkzeug zur Installation von Befestigungsmitteln nach Anspruch 1, ferner umfassend eine oder mehrere lineare Markierungen und eine oder mehrere winkelförmige Markierungen, wobei mindestens eine der einen oder der mehreren linearen Markierungen (112) auf einer Außenfläche in der ersten Ebene positioniert ist und eine oder mehrere winkelförmige Markierungen (142) auf der Außenfläche in der zweiten Ebene positioniert sind und wobei ferner die eine oder die mehreren linearen Markierungen und eine oder mehrere winkelförmige Markierungen sich optisch vom übrigen Körper des Werkzeugs zur Installation von Befestigungsmitteln unterscheiden.

13. Werkzeug zur Installation von Befestigungsmitteln nach Anspruch 1, wobei:
das erste Element ein Paar Ineingriffnahmeelemente mit einem im Wesentlichen ebenen Profil in einer ersten Ebene umfasst.

14. Werkzeug zur Installation von Befestigungsmitteln nach Anspruch 1 oder Anspruch 13, wobei das erste Element eine Kerbe (117) an einem distalen Ende auf einer zum Durchgang weisenden Seite aufweist.

15. Werkzeug zur Installation von Befestigungsmitteln nach einem der Ansprüche 1, 13 oder 14, wobei das distale Ende des ersten Elements gekrümmt, flach, angewinkelt oder verjüngt ist.

16. Werkzeug zur Installation von Befestigungsmitteln nach einem der Ansprüche 1 oder 13 bis 15, wobei das Positionierungselement einen zweiten Kipphebel aufweist, der entlang einer Länge des Positionierungselements zwischen der Durchgangsseite des ersten Elements und dem distalen Ende des Positionierungselements auf einer zweiten Seite positioniert ist.

17. Werkzeug zur Installation von Befestigungsmitteln nach einem der Ansprüche 1 oder 13 bis 16, wobei der Kipphebel und/oder der zweite Kipphebel die Form einer Sanduhr aufweist.

18. Werkzeug zur Installation von Befestigungsmitteln nach einem der Ansprüche 13 bis 17, ferner umfassend eine lineare Markierung (112) auf einer Außenfläche des Körpers in der ersten Ebene und/oder eine winkelförmige Markierung (142) auf der Außenfläche des Körpers in der zweiten Ebene.

19. Werkzeug zur Installation von Befestigungsmitteln nach Anspruch 18, wobei die lineare Markierung auf einer Außenfläche in der ersten Ebene und/oder die winkelförmige Markierung auf der Außenfläche in der zweiten Ebene sich optisch vom übrigen Körper des Werkzeugs zur Installation von Befestigungsmitteln unterscheiden.

20. Werkzeug zur Installation von Befestigungsmitteln nach einem der Ansprüche 1, 12, 18 oder 19, wobei eine lineare Markierung auf einer ersten Seite des Körpers und auf einer zweiten Seite des Körpers positioniert ist.

21. Werkzeug zur Installation von Befestigungsmitteln nach einem der Ansprüche 1, 12 oder 18 bis 20, wobei eine lineare Markierung eine Länge von mehr als 50% der Länge des Körpers des Werkzeugs zur Installation von Befestigungsmitteln aufweist.

22. Werkzeug zur Installation von Befestigungsmitteln nach einem der Ansprüche 1, 12 oder 18 bis 21, wobei eine oder die winkelförmige Markierung auf einer ersten Seite des Körpers und auf einer zweiten Seite des Körpers positioniert ist.

23. Werkzeug zur Installation von Befestigungsmitteln nach einem der Ansprüche 1, 12 oder 18 bis 22, wobei eine oder die winkelförmige Markierung nahe dem Kipphebel positioniert ist.

## Revendications

1. Outil d'installation de fixation (100) configuré pour s'engager avec l'extrémité distale d'un adaptateur allongé ayant un corps comprenant :
un premier élément (110) ayant un profil sensiblement plan dans un premier plan ;
un élément de positionnement (120) formé d'un seul tenant avec le premier élément ;
un canal (115) axial passant de l'extrémité distale de l'outil d'installation de fixation à l'extrémité proximale, **caractérisé en ce que**
l'élément de positionnement comporte un culbuteur (130) positionné sur une longueur de l'élément de positionnement entre une face de canal (118) du premier élément et une extrémité distale de l'élément de positionnement sur un premier côté.

2. Système d'installation de fixation pour fixer un premier élément à un deuxième élément, comprenant l'outil d'installation de fixation (100) selon la revendication 1 et comprenant en outre :
un adaptateur allongé (410) ayant une extrémité proximale et une extrémité distale ;
un dispositif d'entraînement (490) qui génère un couple, monté à une première extrémité de l'adaptateur allongé ;
une unité de transfert de couple qui s'engage avec l'adaptateur allongé et le dispositif d'entraînement pour transférer le couple produit par ledit dispositif d'entraînement à une fixation ; et
au moins un repère linéaire (112) sur une surface extérieure du corps dans le premier plan et un repère angulaire (142) sur la surface extérieure du corps dans le deuxième plan.

3. Système d'installation de fixation selon la revendication 2, dans lequel l'adaptateur allongé est un ensemble de tubes télescopiques.

4. Système d'installation de fixation selon la revendication 3, dans lequel ledit ensemble de tubes télescopiques comprend en outre une rainure de clavette.

5. Système d'installation de fixation selon la revendication 3 ou la revendication 4, dans lequel l'ensemble de tubes télescopiques comprend un premier élément tubulaire pouvant être configuré pour s'engager avec l'outil d'entraînement et pouvant s'engager de manière coulissante avec un deuxième élément tubulaire.

6. Système d'installation de fixation selon l'une quelconque des revendications 2 à 5, dans lequel au moins l'un des premiers éléments comporte une encoche (117) à une extrémité distale sur un côté faisant face au canal.

7. Système d'installation de fixation de l'une quelconque des revendications 2 à 6 comprenant en outre un outil indicateur de position (300) s'engageant de manière amovible avec l'adaptateur allongé.

8. Système d'installation de fixation selon la revendication 7, dans lequel l'outil indicateur de position comprend en outre une paire d'éléments de montage s'engageant avec un flacon partiellement rempli de fluide.

9. Système d'installation de fixation selon la revendication 7 ou la revendication 8, dans lequel l'outil indicateur de position comprend en outre un pointeur laser.

10. Système d'installation de fixation selon l'une quelconque des revendications 2 à 9, dans lequel l'outil d'entraînement est l'une d'une perceuse à batterie et d'une perceuse à cordon électrique.

11. Système d'installation de fixation selon l'une quelconque des revendications 2 à 10, comprenant en outre une ou plusieurs extensions secondaires et un ou plusieurs connecteurs d'extension, dans lequel lesdits une ou plusieurs extensions secondaires et uns ou plusieurs connecteurs d'extension s'engagent de manière modulaire avec l'adaptateur allongé.

12. Outil d'installation de fixation selon la revendication 1, comprenant en outre un ou plusieurs repères linéaires et un ou plusieurs repères angulaires, dans lequel au moins l'un desdits un ou plusieurs repères linéaires (112) est positionné sur une surface extérieure dans le premier plan et un ou plusieurs repères angulaires (142) sont positionnés sur la surface extérieure dans le deuxième plan, et dans lequel, en outre, lesdits un ou plusieurs repères linéaires et un ou plusieurs repères angulaires se distinguent visuellement du reste du corps de l'outil d'installation de fixation.

13. Outil d'installation fixation selon la revendication 1, dans lequel : le premier élément comprend une paire d'éléments d'engagement ayant un profil sensiblement plan dans un premier plan.

14. Outil d'installation de fixation selon la revendication 1 ou la revendication 13, dans lequel le premier élément comporte une encoche (117) à une extrémité distale sur un côté faisant face au canal.

15. Outil d'installation de fixation selon l'une quelconque des revendications 1, 13 ou 14, dans lequel l'extrémité distale du premier élément est courbée, plate, inclinée ou effilée.

16. Outil d'installation fixation selon l'une quelconque des revendications 1 ou 13 à 15, dans lequel l'élément de positionnement comporte un deuxième culbuteur positionné sur une longueur de l'élément de positionnement entre la face de canal du premier élément et l'extrémité distale de l'élément de positionnement sur un deuxième côté.

17. Outil d'installation de fixation selon l'une quelconque des revendications 1 ou 13 à 16, dans lequel le culbuteur et/ou le deuxième culbuteur a une forme de sablier.

18. Outil d'installation de fixation selon l'une quelconque des revendications 13 à 17, comprenant en outre au moins l'un parmi un repère linéaire (112) sur une surface extérieure du corps dans le premier plan et un repère angulaire (142) sur la surface extérieure du corps dans le deuxième plan.

19. Outil d'installation de fixation selon la revendication 18, dans lequel au moins l'un parmi le repère linéaire sur une surface extérieure dans le premier plan et le repère angulaire sur la surface extérieure dans le deuxième plan se distinguent visuellement du reste du corps de l'outil d'installation de fixation.

20. Outil d'installation de fixation selon l'une quelconque des revendications 1, 12, 18 ou 19, dans lequel un repère linéaire est positionné sur un premier côté du corps et un deuxième côté du corps.

21. Outil d'installation de fixation selon l'une quelconque des revendications 1, 12 ou 18 à 20, dans lequel un repère linéaire a une longueur supérieure à 50 % de la longueur du corps de l'outil d'installation de fixation.

22. Outil d'installation de fixation selon l'une quelconque des revendications 1, 12 ou 18 à 21, dans lequel un ou le repère angulaire est positionné sur un premier côté du corps et un deuxième côté du corps.

23. Outil d'installation de fixation selon l'une quelconque des revendications 1, 12 ou 18 à 22, dans lequel un ou le repère angulaire est positionné à proximité du culbuteur.
